# EUROPEAN PATENT SPECIFICATION

(11) **EP 1 539 300 B1**
(45) Date of publication and mention of the grant of the patent: **28.07.2010**
(21) Application number: 03748292.4
(22) Date of filing: 15.09.2003
(51) Int. Cl.: A62B 21/00

(54) **OXYGEN GENERATOR**
SAUERSTOFFGENERATOR
GENERATEUR D'OXYGENE

(30) Priority: 16.09.2002 GB 0221451
(43) Date of publication of application: 15.06.2005
(73) Proprietor: Molecular Oxygen Limited, Essex, CM6 2LT (GB)
(72) Inventor: CRUDACE, Amanda Jayne, Molecular Products Limited, Thaxted, Essex CM6 2LT (GB); GREEN, Stephen Robert, Molecular Products Limited, Thaxted, Essex CM6 2LT (GB)
(74) Representative: Scott, Susan Margaret
(86) International application number: PCT/GB2003/004072
(87) International publication number: WO 2004/024239

(56) References cited:
- EP-A- 0 363 913
- WO-A-00/43071
- WO-A-96/38376
- WO-A-02/098512
- CH-A- 180 448
- GB-A- 1 341 869
- US-A- 5 338 516
- US-A- 5 725 834

## Description

This invention relates to oxygen generators, and in particular to a generator for providing breathable oxygen.

Oxygen is generated on an industrial scale by numerous different methods. These include isolation of molecular oxygen from air and decomposition of water by, for example, electrolytic means. On an industrial scale, however, these methods require substantial capital investment, and the resulting plant is large, heavy, and immobile.

On a commercial scale, for providing breathable oxygen by portable means, oxygen is generally supplied from an oxygen cylinder, i.e., the oxygen is stored in molecular form, or generated on demand by a chemical reaction, a term used herein to exclude electrolytic decomposition and other methods in which generation requires an external source of energy.

Breathable oxygen generation by a chemical reaction has been known for a very long time, and portable oxygen candles are articles of commerce. A typical candle comprises an oxygen-containing chemical, for example an alkali metal chlorate or perchlorate, in admixture with a catalyst that facilitates lower temperature decomposition of the chemical to oxygen and residual solids and optionally a fuel, for example iron. A typical catalyst is manganese dioxide, which reduces the temperature at which potassium chlorate decomposes from about 400°C to below about 240°C.

However, the overall reaction is exothermic, and the exterior of the reaction mass generally reaches very high temperatures, of the order of 600°C or more. Considerable efforts have been made to provide portable devices that can safely be held by the user during operation despite the high temperatures reached during the reaction.

A number of thermally insulated devices are described in U.S. Patent No. 5 725 834 (Nishii et al, assigned to Daicel Chemical Industries, Ltd.). The patent describes a prior art device in which silica is used as thermal insulation, which has the dual function of maintaining the exterior of the housing at an acceptably low temperature and maintaining the interior of the candle at a high enough temperature to ensure decomposition of all contained materials, to maximize oxygen output. GB 1 341 869 describes lighters for gas burners which comprise a knurled wheel and a flint. WO 00/43071 describes a particular structure for an oxygen generating device.

The present invention provides a chemical oxygen generator according to claim 1.

Preferably the device is at least partly enclosed within thermal insulating means comprising a vacuum jacket.

The generator is typically generally in the form of a cylinder, referred to hereinafter as a candle. The candle may be a cast body or a loose-filled or compacted powder, pelletized, or granular material. The candle advantageously comprises a metal chlorate or perchlorate, preferably an alkali metal, especially sodium or lithium, chlorate or perchlorate, in admixture with a catalyst, especially manganese dioxide, and a fuel, for example a metal, especially iron or magnesium. The candle is provided with ignition means. The ignition means may be at one end of the candle or generally centrally located to provide two burn fronts travelling in different directions, preferably opposite directions towards the ends of the candle. In one preferred embodiment of the invention, the invention accordingly also provides an oxygen generator in accordance with the invention, in which the generating device comprises:
(a) generating means for chemically generating oxygen when ignited and
(b) ignition means for igniting the generating means, the generating means being arranged to sustain during operation propagation of a plurality of, preferably two, burn fronts therethrough, the fronts propagating in generally different, preferably opposite, directions the device being at least partly enclosed within thermal insulating means comprising a vacuum jacket.

A burn front is the interface region bounded by unburnt and burnt regions of the generating means, and in operation travels towards the unburnt region.

The provision of the ignition means at a central region of the candle has the advantage that the ignition site, which becomes the hottest part of the candle, is remote from reusable parts of the generator. Further, the use of two or more burn fronts dissipates the heat generated over a wider area and assists in the control of the burn process.

The oxygen generating means may, for example, comprise at least one first element positioned and arranged for ignition by the igniting means, and a plurality of second elements each positioned and arranged for ignition by a first element, so that in operation a plurality of burn fronts is propagated through the at least one first element and through the plurality of second elements, the direction of propagation of one of the burn fronts differing from the direction of propagation of at least one other of the burn fronts.

The ignition means may, for example, be located in the central region of an oxygen generator of a generally cylindrical shape, the length of the generator being greater than its diameter so that in operation two burn fronts are propagated from the central region toward opposite ends of the generator. In this case also, there are preferably provided at least one first element of the generating means arranged for ignition by the ignition means and a plurality of second elements for ignition by a first element. There may be a succession of elements extending toward one or preferably both ends of the generator, each arranged for ignition by the immediately preceding element.

Whether the ignition means is at one end or centrally located, elements adjacent to and closer to the ignition means are advantageously more reactive, i.e., contain a greater proportion of fuel, e.g., iron, than elements more remote from it, to improve stability of the candle and render it less susceptible to accidental ignition. The most remote element may, if desired, contain no fuel, it having been found that this provides a lower maximum external temperature after reaction is complete. Step-wise gradation of the elements facilitates manufacture, as each element has a uniform composition, and the candle is then assembled from discrete components. The interfaces between elements may be of conical or frusto-conical form, assisting in control of burn front propagation between adjacent elements.

The ignition means is mechanically operable and comprises a means for generating a friction-generated spark, by contact of a friction wheel or other friction member with a flint, e.g., a cerium-iron alloy.

Advantageously, the composition of the element of the oxygen-generating means in which, in use, ignition takes place, e.g., by contact with the spark, is extremely reactive. It may contain, for example, in addition to the main candle material, for example, the chlorate or perchlorate and fuel, a strong oxidizing agent, for example, manganese dioxide, or, especially, a permanganate, e.g., potassium permanganate. Advantageous ranges of proportions in the ignition region of the candle may be, for example, sodium chlorate up to 70%, fuel, e.g., iron, up to 50%, and oxidizing agent up to 50%, the percentages being by weight of the total composition. There are provided means for abrading the part of the surface of the element of the generating device to be ignited, preferably immediately before ignition. Such abrasion ensures that any surface changes that might take place during storage do not result in inhibition of ignition and, more importantly, that loosened material, for example in the form of small particles, e.g. dust, is available for ignition by the spark. The abrasion means may be, for example, the friction member itself or, advantageously, an associated member that is actuated when the friction member is actuated. Advantageously, in its rest position the means for abrading the element surface to be ignited is not in contact with the surface and is moved into contact only when the friction member is actuated. When the ignition region is firmly compacted, as in preferred embodiments of the invention, it tends to be resistant to ignition by sparking. This, especially when in combination with the abrasion means being, when in the storage position, out of contact with the candle, makes for additional safety in storage and transport.

Advantageously, especially when the spark generating means is located to provide two burn fronts, as described above, the candle is a cylinder of a section other than circular, and advantageously has a cross-section in the form of a major segment of a circle. The ignition means is then advantageously positioned close or adjacent to the flat surface (chord) of the cylinder, so that in operation the spark is directed at a flat surface of the candle. The portion of the cylinder having the cross-section of the corresponding minor segment of the circle advantageously contains means for actuating the ignition means, preferably extending to a location outside the vacuum jacket if present, and a conduit for transporting oxygen to a user, the conduit advantageously including filter means. The oxygen conduit, filter means, and actuating means advantageously form or are contained in a cylindrical unit having the cross-section of the corresponding minor segment of the circle. The unit advantageously is apertured in its flat surface (chord) to allow contact of the abrading means with and transmission of the spark to the candle, and transmission of oxygen to the conduit.

Advantageously, the means for actuating the ignition means comprises a rotatable shaft on which the friction member and its associated abrasion member are mounted. The shaft also carries, advantageously remote from the ignition means, means for rotating the shaft, for example a gear means driven directly or indirectly by handle means. Operation of the handle means may actuate the ignition means directly but advantageously, to ensure uniformity of actuation, actuation is indirect, for example by the handle deforming spring means, disengagement of the handle causing or allowing the spring means to actuate the ignition means. Actuation may take place, for example, by gear means associated with the spring means rotating the shaft by way of the gear means carried on the shaft.

In certain embodiments, the candle is advantageously provided with an apertured, for example perforated, casing, for example, of gauze, of a material, preferably a metal, of high thermal conductivity, for example copper or brass, in good thermal contact with the candle material. The casing transmits heat from the burn front and the burnt region to the unburnt region or regions, thereby pre-heating the unburnt region and help establish an even burn. The perforations provide channels for the oxygen to flow.

If a vacuum jacket is present, an intermediate layer or layers of insulation may be provided between the candle or the casing if present and the vacuum jacket. This insulation may be rigid or flexible, for example, of ceramic, rockwool, or particulate material.

The generator according to the invention may be provided with means to blend the oxygen produced with atmospheric air, to deliver oxygen-enriched air, rather than pure oxygen, to a user. The generator may also be provided with an absorbent to absorb any traces of impurities, for example carbon monoxide and chlorine, generated with the oxygen; the copper or brass used as a casing may perform this function also, or additional copper or brass for example, in particulate form, may be provided in the oxygen pathway.

The candle is preferably at least partially contained within a vacuum-jacket vessel. The vessel is advantageously of complementary shape to the candle, to the casing if present, or to the candle and the cylindrical unit described above.

Clearance may be provided between the internal wall of the vessel and the peripheral wall of the candle to allow oxygen to reach the outlet, a spacer or spacers being provided to secure the position of the candle within the vessel. The spacer or spacers may be shaped to provide a tortuous path for the oxygen to follow to allow some cooling before reaching the outlet of the generator. Alternatively the oxygen may all be transmitted through the apertured flat face of the unit if present.

The vacuum-jacket vessel may be of any material capable of withstanding the temperatures reached by the burning candle; a steel, preferably stainless steel, vessel is presently preferred. Alternatively, a robust glass vessel, for example, a borosilicate glass vessel may be used.

A spacing between inner and outer walls of the vessel in the range of from 3 to 5 mm is presently preferred. The vessel is evacuated to provide a high vacuum, advantageously in the range of from 10⁻⁷ to 10⁻⁵ mbar (0.01 to 10 Pa), for example about 10⁻⁶ mbar (0.1 Pa)

In a preferred embodiment of the invention there may be provided, surrounding at least a part of the vacuum jacket, an exterior jacket of thermal insulating material. This may be, for example, of a silicone material, especially a silicone rubber, or other material, e.g., a polymer, having relatively low thermal conductivity and, advantageously, good resistance to elevated temperature. The jacket material may be solid or foamed, and advantageously the surface of the jacket contacting the outer surface of the vacuum vessel is shaped to minimize contact, and hence thermal transmission, between them. The jacket surface may have a raised grid, annuli, or linear pattern. Advantageously, the surface has spaced protuberances or bosses, for example, of cylindrical or hemispherical configuration. It has been found that hemispherical bosses of about 1mm height and spaced at about 1mm intervals on a silicone layer of thickness about 2mm provide an outer surface that in operation reaches a maximum temperature of 45°C.

One oxygen generator constructed in accordance with the invention will now be described by way of example only with reference to the accompanying drawings, in which:
Figure 1 is an axial section through the oxygen generator;
Figure 2 is an isometric view of the actuator and oxygen transmission unit;
Figure 3 is an isometric view of the abrader and ignition means;
Figure 4 is an isometric view of the abrader, ignition means and actuator device, and
Figures 5a and 5b are diagrammatic plan views of the actuator device.

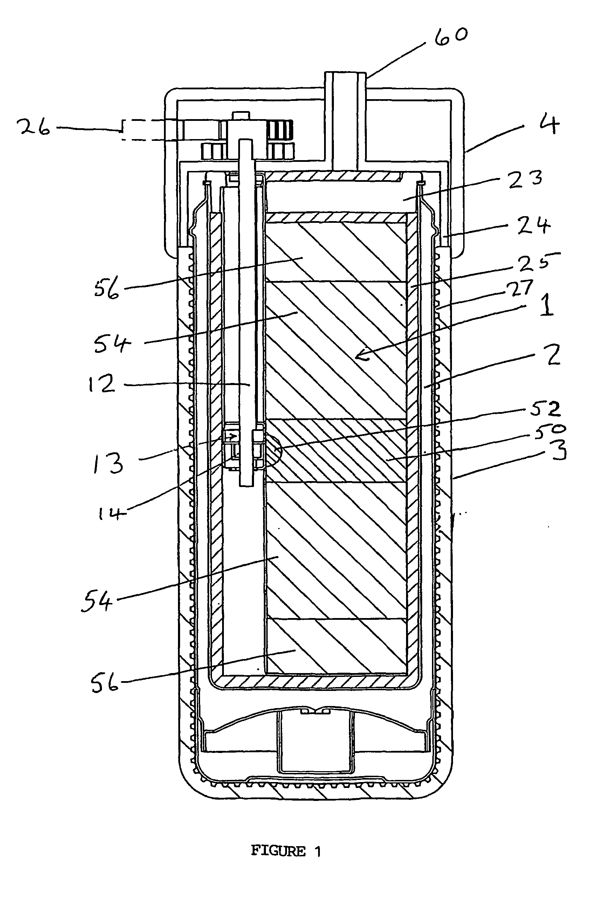

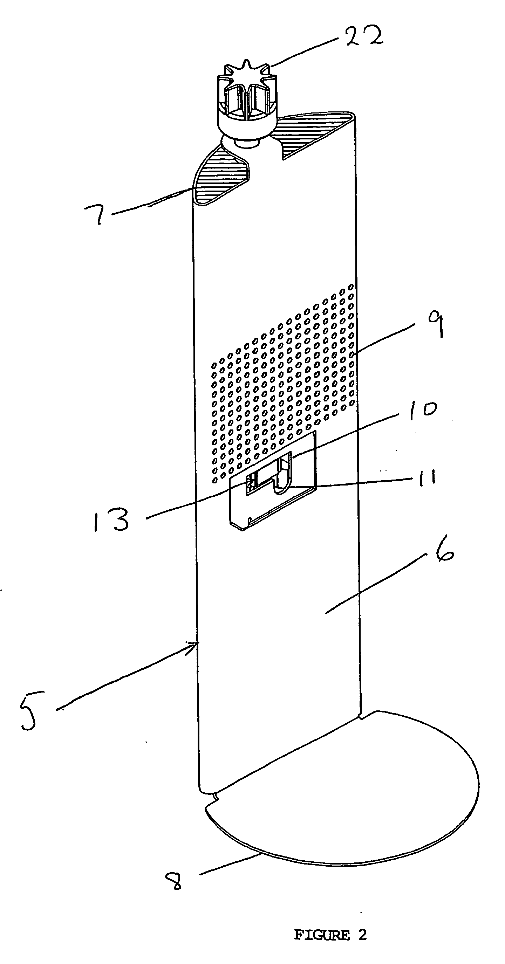

Referring now more especially to Figures 1 and 2, there are shown an oxygen candle indicated generally by the reference numeral 1, enclosed other than at its top by a layer of rockwool insulation 25 within a vacuum jacket 2, which is in turn enclosed other than at its top by a further insulating jacket 3 of silicone rubber.

The top of the vacuum jacket 2 is closed by a ceramic plug 23 over which are a cover plate 24 and an outer cap 4.

The insulating jacket 3 contacts the vacuum jacket 2 only at the tips of bosses 27, thereby minimizing heat transmission outward from the candle 1 to the exterior surface of the silicone jacket 3.

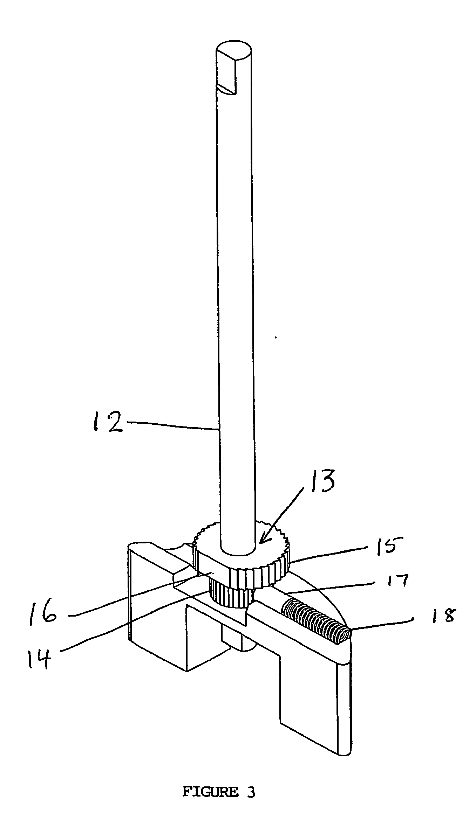

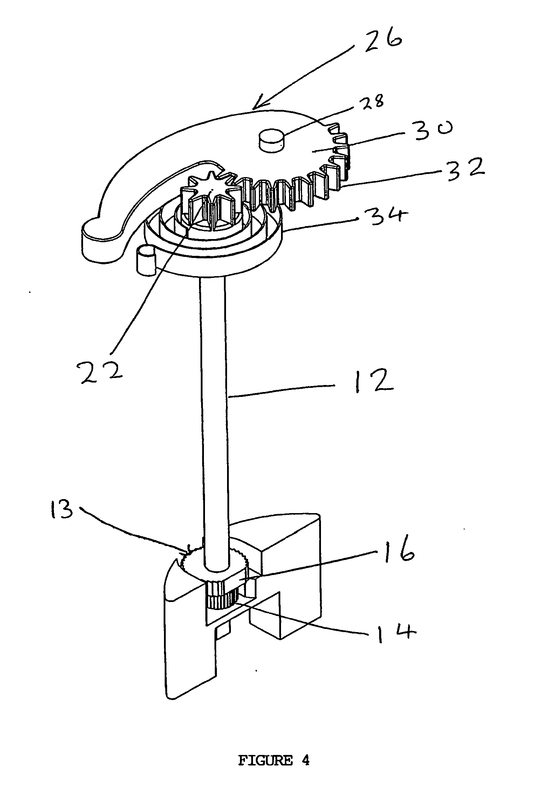

Also enclosed within the vacuum jacket 2 is a unit indicated generally by the reference numeral 5 (see more especially Figure 2). The unit 5 has a planar face 6, a part-cylindrical face 7 and a circular base 8, the portion of which extending beyond the bottom (as shown in Figures 1 and 2) edges of faces 6 and 7 supports the candle 1. In a mid-upper portion of the planar face 6 are perforations 9, and in the mid-portion of the face 6 is an aperture having an upper rectangular portion 10 and below it a part-circular portion 11. Within the upper portion of the unit 5, supported on bearings (not shown) is a shaft 12, the lower end of which (see more especially Figures 3 and 4) carries an abrasion wheel indicated generally by the reference numeral 13 and a friction wheel 14. The abrasion wheel 13 has teeth 15 extending around about 300° of its circumference, the remaining 60° segment being cut away to leave a flat surface 16. The teeth 15 are inclined, as in a ratchet wheel, for a purpose explained below.

The friction wheel 14 which is of smaller diameter than the abrasion wheel 13 has a toothed circumference, a portion of which is in contact with a flint 17, pressed against the wheel 13 by a compression spring 18.

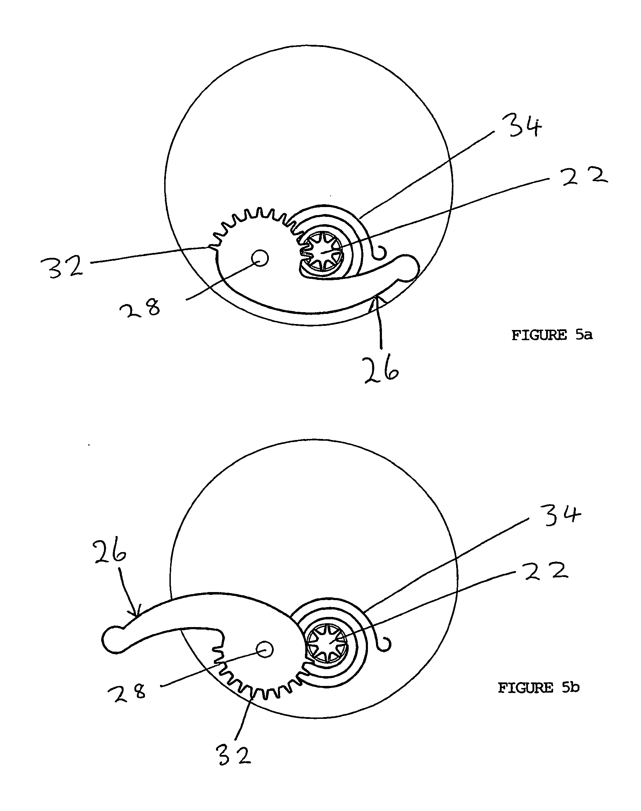

Referring now more especially to Figures 4 and 5, there are shown in more detail the actuating means. Mounted on the upper end of the shaft 12 are a gear wheel 22 and the end of a spiral spring 34, the other end of the spring 34 being mounted on a stop (not shown) on a cover plate 24 (see Figure 1). An operating handle, indicated generally by the reference numeral 26, is mounted on a pivot 28, and has a partially-toothed circular portion 30 coaxial with the pivot, teeth 32 of which circular portion engage the gear wheel 22.

In Figures 4 and 5a, the operating handle 26 is shown in its rest or storage position. The forwardmost (clockwise from above as viewed in Figure 5) of teeth 32 are in engagement with the gear wheel 22, and the flat surface 16 of the abrasion wheel 13 faces, but does not contact, the candle.

In Figure 5b, the operating handle 26 is shown rotated clockwise by about 180°. The rearmost of teeth 32 are about to disengage from the gear wheel 22 which has been driven anticlockwise against the force of the spring 34, turning the abrasion wheel 13 in the same direction. As the teeth 15 of the abrasion wheel are inclined, they have not abraded the adjacent surface of the candle to any significant extent.

Referring now again to Figure 1, the candle 1 has a central element 50 positioned opposite aperture portions 10 and 11 in the unit 5. The element 50 has in its flat face adjacent to the apertures 10 and 11 a hemispherical primer 52 comprising, in addition to the oxygen-supplying material and fuel that are in the remainder of the element 50, an oxidizing agent. Above and below the element 50 are elements 54 having a lower proportion of fuel. More remote from the element 50 than the elements 54 are elements 56 having no fuel.

In operation, the handle 26 is slowly rotated clockwise from the position seen in Figure 5a until the position shown in Figure 5b is reached. By this point, the abrasion wheel 13 has turned so that its teeth 15 are in contact with the material of primer 52. The slow movement of the friction wheel 14 against the flint 17 removes any oxide film from the flint during this operation. Then, disengagement of the teeth 32 takes place, allowing the spring 34 to drive the gear wheel 22 and the shaft 12 rapidly clockwise, causing the forward-facing edges of inclined teeth 15 to abrade the surface of the primer 52. The friction wheel 13 and the flint 17 generate sparks which pass through the aperture 11 and ignite the primer 52 at its newly exposed surface, and/or the dust displaced therefrom, the burn front from the primer igniting the element 50. The burn fronts extend through element 50 and subsequently burn fronts travel through the remaining elements. Oxygen generated by the candle passes into the unit 5 through the perforations 9, and hence through a filter (not shown) to remove any impurities that maybe co-generated, and via outlet 60 to a user.

The following Examples illustrate the invention.

A first oxygen generator constructed in accordance with the invention comprises a sodium chlorate-based candle encased in a copper gauze and delivering 90 litres of USP oxygen at a rate of 6 litres per minute.

The encased candle had a length of 12 cm and a diameter of 3.5 cm, and was encapsulated in insulation material and then in a vacuum flask of length 17 cm, internal diameter 6 cm and external diameter 7 cm. The generator weighed 0.6 kg and had a total length of 17 cm. In operation, the highest temperature reached at the exterior of the flask was 50°C.

A second oxygen generator constructed as described with reference to the drawings and containing a similar candle had outer dimensions, including the silicone jacket, of diameter 6cm and length 16cm. In operation, the highest temperature reached at the exterior of the silicone jacket was 45°C.

For comparison, a generator commercially available from Molecular Products Limited and containing an identical candle was tested. The candle was insulated by rockwool and ceramic material. The total weight of the generator was 0.5 kg, its length was 13 cm and its diameter 10 cm. In operation, the highest exterior temperature reached was 150°C.

## Claims

1. A chemical oxygen generator comprising a generating device for producing oxygen by chemical reaction,
**characterised in that**
the device comprises mechanically driven friction-induced spark generating ignition means and an ignition element (52) in which, in use, ignition takes place by contact with a spark generated by said spark generating ignition means; and in which said spark generating ignition means comprises a friction member (14) and flint (17), and means (13) for abrading the part of the surface of said ignition element (52) where ignition takes place.

2. A generator as claimed in claim 1, wherein the device is in the form of a cylinder having a cross-section of a major segment of a circle, the ignition means being positioned close or adjacent to the flat surface of the cylinder.

3. A generator as claimed in either claim 1 or claim 2, wherein the ignition means is located in a central region of the device, the device being arranged to sustain during operation propagation of a plurality of burn fronts therethrough, the fronts propagating in generally different directions.

4. A generator as claimed in claim 3, the device being arranged to sustain during operation propagation of two burn fronts travelling in opposite directions.

5. A generator as claimed in any one of claims 1 to 4, the device being at least partly enclosed within thermal insulating means comprising a vacuum jacket (2).

6. A generator as claimed in claim 5, wherein the device is also enclosed within thermal insulating material (3).

7. A generator as claimed in any one of claims 1 to 6, wherein the device comprises a metal chlorate or perchlorate, in admixture with a catalyst and a fuel.

8. A generator as claimed in claim 7, wherein the device comprises sodium chlorate, manganese dioxide, and iron.

9. A generator as claimed in any one of claims 1 to 6, in which the ignition element comprises a metal chlorate or perchlorate, fuel, and manganese dioxide or a permanganate.

10. A generator as claimed in claim 1, wherein the spark generating means is located in a central region of the device, the device being arranged to sustain during operation propagation of two burn fronts travelling in opposite directions and generating oxygen thereby, the device being at least partially enclosed within thermal insulating means comprising a vacuum jacket (2) and optionally also thermal insulating material (3).

## Patentansprüche

1. Chemischer Sauerstoffgenerator, welcher eine Generatorvorrichtung zum Erzeugen von Sauerstoff durch chemische Reaktion enthält, **dadurch gekennzeichnet, dass** die Vorrichtung ein mechanisch angetriebenes, reibungsinduziertes Funkenerzeugungs-Zündungsmittel und ein Zündungselement (52) enthält, in welchem in der Verwendung eine Zündung durch einen Kontakt mit einem Funken stattfindet, welcher durch das Funkenerzeugungs-Zündungsmittel erzeugt wird; und wobei das Funkenerzeugungs-Zündungsmittel ein Reibungselement (14) und einen Feuerstein (17) und ein Mittel (13) zum Abreiben jenes Teils der Oberfläche des Zündungselements (52), bei welcher die Zündung stattfindet, enthält.

2. Generator nach Anspruch 1, wobei die Vorrichtung in der Form eines Zylinders ist, welcher einen Querschnitt eines Hauptsegments eines Kreises hat, und wobei das Zündungsmittel nahe oder angrenzend der flachen Oberfläche des Zylinders positioniert ist.

3. Generator nach Anspruch 1 oder 2, wobei das Zündungsmittel in einem zentralen Bereich der Vorrichtung positioniert ist, wobei die Vorrichtung dazu ausgelegt ist, während des Betriebes einer Verbreitung einer Mehrzahl von Brandfronten **dadurch** zu widerstehen, wobei sich die Fronten allgemein in unterschiedliche Richtungen verbreiten.

4. Generator nach Anspruch 3, wobei die Vorrichtung dazu ausgelegt ist, während des Betriebes einer Verbreitung von zwei Brandfronten zu widerstehen, welche sich in entgegengesetzte Richtungen ausbreiten.

5. Generator nach einem der Ansprüche 1 bis 4, wobei die Vorrichtung zumindest teilweise innerhalb eines thermischen Isolationsmittels umhüllt ist, welches eine Vakuumhülle (2) enthält.

6. Generator nach Anspruch 5, wobei die Vorrichtung ebenfalls innerhalb eines thermischen Isolationsmaterials (3) umhüllt ist.

7. Generator nach einem der Ansprüche 1 bis 6, wobei die Vorrichtung ein Metallchlorat oder Perchlorat in Beimischung mit einem Katalysator und einem Brennstoff enthält.

8. Generator nach Anspruch 7, wobei die Vorrichtung Natriumchlorat, Mangandioxid und Eisen enthält.

9. Generator nach einem der Ansprüche 1 bis 6, wobei das Zündungselement Metallchlorat oder Perchlorat, Brennstoff und Mangandioxid oder Permanganat enthält.

10. Generator nach Anspruch 1, wobei das Funkenerzeugungsmittel in einem zentralen Bereich von der Vorrichtung positioniert ist, wobei die Vorrichtung dazu ausgelegt ist, während des Betriebes einer Verbreitung von zwei Brandfronten zu widerstehen, welche sich in entgegengesetzte Richtungen ausbreiten und **dadurch** Sauerstoff erzeugen, wobei die Vorrichtung zumindest teilweise innerhalb eines thermischen Isolationsmittels umhüllt ist, welches eine Vakuumhülle (2) und optional ebenfalls ein thermisches Isolationsmaterial (3) enthält.

## Revendications

1. Générateur chimique d'oxygène comprenant un dispositif générateur pour produire de l'oxygène par réaction chimique, **caractérisé en ce que** le dispositif comprend des moyens d'allumage générateurs d'étincelles induites par frottement entraînés mécaniquement et un élément d'allumage (52) dans lequel, en cours d'utilisation, l'allumage se produit par contact avec une étincelle générée par lesdits moyens d'allumage générateurs d'étincelles; et dans lequel lesdits moyens d'allumage générateurs d'étincelles comprennent un élément de frottement (14) et un silex (17), ainsi que des moyens (13) pour frotter sur la partie de la surface dudit élément d'allumage (52) lorsque l'allumage a lieu.

2. Générateur selon la revendication 1, dans lequel le dispositif se présente sous la forme d'un cylindre ayant une section transversale d'un segment majeur de cercle, les moyens d'allumage étant positionnés à proximité ou de manière adjacente par rapport à la surface plate du cylindre.

3. Générateur selon l'une quelconque de la revendication 1 ou de la revendication 2, dans lequel les moyens d'allumage sont placés dans une région centrale du dispositif, le dispositif étant aménagé pour y soutenir, en cours de fonctionnement, la propagation d'une pluralité de fronts de combustion, les fronts se propageant dans des directions généralement différentes.

4. Générateur selon la revendication 3, dans lequel le dispositif est aménagé de manière à soutenir, en cours de fonctionnement, la propagation de deux fronts de combustion se déplaçant dans des sens opposés.

5. Générateur selon l'une quelconque des revendications 1 à 4, dans lequel le dispositif est au moins en partie enserré dans des moyens d'isolation thermique comprenant une chemise à vide (2).

6. Générateur selon la revendication 5, dans lequel le dispositif est également enserré dans un matériau d'isolation thermique (3).

7. Générateur selon l'une quelconque des revendications 1 à 6, dans lequel le dispositif comprend un chlorate ou un perchlorate de métal, en mélange avec un catalyseur et un combustible.

8. Générateur selon la revendication 7, dans lequel le dispositif comprend du chlorate de sodium, du dioxyde de manganèse et du fer.

9. Générateur selon l'une quelconque des revendications 1 à 6, dans lequel l'élément d'allumage comprend un chlorate ou un perchlorate de métal, du combustible et du dioxyde de manganèse ou un permanganate.

10. Générateur selon la revendication 1, dans lequel les moyens générateurs d'étincelles sont placés dans une région centrale du dispositif, le dispositif étant aménagé pour soutenir, en cours de fonctionnement, la propagation de deux fronts de combustion se déplaçant dans des sens opposés et générant ainsi de l'oxygène, le dispositif étant au moins en partie enserré dans des moyens d'isolation thermique comprenant une chemise à vide (2) et éventuellement également un matériau d'isolation thermique (3).
